(19) Europäisches Patentamt
European Patent Office
Office européen des brevets

(11) Numéro de publication: **0 115 727**
**B1**

(12) # FASCICULE DE BREVET EUROPÉEN

(45) Date de publication du fascicule du brevet: **26.11.86**

(51) Int. Cl.⁴: **C 02 F 5/12**

(21) Numéro de dépôt: **83402497.8**

(22) Date de dépôt: **21.12.83**

(54) **Procédé pour l'inhibition du dépôt d'argiles dans de l'eau.**

(30) Priorité: **31.12.82 FR 8222181**

(43) Date de publication de la demande:
**15.08.84 Bulletin 84/33**

(45) Mention de la délivrance du brevet:
**26.11.86 Bulletin 86/48**

(84) Etats contractants désignés:
**BE DE GB IT LU NL**

(56) Documents cité:
**FR-A-2 476 113**
**US-A-4 003 842**

(73) Titulaire: **SOCIETE NATIONALE ELF AQUITAINE, Tour Aquitaine, F-92400 Courbevoie (FR)**

(72) Inventeur: **Vio, Lino, 73 Avenue Copernic, F-64000 Pau (FR)**
Inventeur: **Meunier, Gilles, 48 Avenue Joseph d'Ariste, F-64230 Lescar (FR)**

(74) Mandataire: **Kohn, Armand, 5 Avenue Foch, F-92380 Garches (FR)**

**EP 0 115 727 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

La présente invention concerne un procédé pour empêcher la sédimentation d'argiles dans des eaux qui en contiennent; elle s'applique notamment au traitement de l'eau des rivières, utilisée dans des circuits industriels, cette eau contenant plus ou moins d'argile à l'état de suspension. L'invention comprend également un produit servant d'additif à l'eau en vue de cet empêchement de la sédimentation des argiles.

Un des inconvénients, auxquels on se heurte dans l'industrie, lorsque l'eau de rivière est utilisée dans des circuits de fabrication, réside en ce que des particules d'argile, initialement présentes dans l'eau, s'agglomèrent et se déposent dans les canalisations ou récipients; cela se traduit par un encrassement qui abaisse le coefficient de transmission thermique des parois des appareils concernés; en même temps, le coefficient de frottement sur ces parois augmente, compromettant les qualités hydrodynamiques de l'appareil. Dans des cas de passages étroits, on risque même un bouchage complet. Lorsque des argiles sont par elles-mêmes nocives pour une fabrication, on est obligé de les éliminer au préalable par une opération plus ou moins coûteuse; mais quand il s'agit d'emploi où seule la sédimentation est physiquement gênante, comme par exemple dans des circuits de refroidissement, on ne procède généralement pas à une élimination complète des argiles et l'on emploie des moyens pour seulement empêcher le dépôt de ces substances. On connaît en particulier des adjuvants, tels que par exemple méthylène bis-naphthalène sulfonate de sodium dont l'addition à l'eau permet de réduire la sédimentation des argiles présentes. Cependant, il reste encore fort à faire dans cette voie, parce que les adjuvants connus n'exercent qu'une action partielle et laissent tout de même précipiter une grande partie des argiles contenues dans l'eau.

La présente invention constitue un perfectionnement marqué dans le procédé d'inhibition du dépôt des argiles par l'utilisation d'additifs. Elle permet en effet d'augmenter considérablement la fraction d'argile qui reste en suspension après plusieurs jours de repos, cette fraction étant beaucoup plus élevée qu'avec les adjuvants connus jusqu'à présent. Un autre avantage, apporté par l'invention, réside en ce que le nouvel adjuvant utilisé donne de bons résultats même avec des eaux plus ou moins salines, notamment des eaux saumâtres, par exemple celles des estuaires. Il suffit d'ailleurs de concentrations, en l'adjuvant suivant l'invention, bien moindres que dans le cas des additifs usuels.

L'invention réside en un procédé pour l'empêchement de la sédimentation d'argiles dans l'eau, par l'adjonction d'un polymère porteur de groupes hydroxamiques ou thiohydroxamiques, ou de tels groupes substitués, attachés à une chaine hydrocarbonée, linéaire, caractérisé en ce que seulement 0,5 à 10 mg de ce polymère sont dissous dans l'eau à traiter, et le polymère a une masse moléculaire de 600 à 5100.

Des polymères hydroxamiques ont été employés, dans la technique antérieure, pour abaisser la viscosité des boues de forage à base d'argile. Ainsi, selon FR-A 2 476 113, on arrive à une boue de faible viscosité par l'adjonction, par litre, de 1 à 5g d'un polymère ou copolymère de faible poids moléculaire, portant 2 à 95% de fonctions hydroxamiques. Cependant, dans le cas des eaux tenant des argiles en suspension, de telles proportions de composé hydroxamique non seulement n'inhibent pas les dépôts des argiles, mais - au contraire - en provoquant la précipitation.

Le nouveau procédé, suivant l'invention, consiste à dissoudre dans l'eau à traiter la faible quantité susindiquée d'un polymère hydrosoluble, porteur de groupes hydroxamiques attachés à une chaîne hydrocarbonée, linéaire. Ces polymères peuvent être représentés par la formule

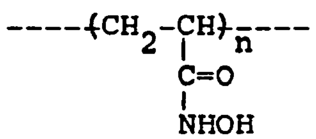

(1)

La chaîne polyoléfinique ---$CH_2$-CH--- peut être du type polyvinyle, polyacryle, polybuténycle, etc., mais peut également comporter des motifs de copolymères, par exemple des acides, esters ou sels acryliques, maléiques, vinyliques, en particulier d'acétate de vinyle, de vinyl pyrrolidone, de butadiène, styrène ou d'acrylonitrile.

Dans les inhibiteurs de la sédimentation d'argiles, suivant l'invention, le groupe hydroxamique peut être partiellement ou entièrement remplacé par un thio dérivé correspondant, c'est-à-dire un groupe du type

$$-\overset{S}{\overset{\|}{C}}-NHOH \quad , \quad -\overset{S}{\overset{\|}{C}}-NHSH \quad \text{ou} \quad -\overset{O}{\overset{\|}{C}}-NHSH$$

Une forme particulièrement utile des polymères hydroxamiques concernés est celle dans laquelle la chaîne hydrocarbonée porte à la fois les groupes hydroxamiques (1) et des groupes amide par la formule

$$----(CH_2-\underset{\underset{NH_2}{|}}{\underset{C=O}{|}}{CH})_n--- \qquad (2)$$

L'activité inhibitrice des fonctions hydroxamiques n'est pas gênée par la présence des fonctions amide, alors que la préparation de ces composés mixtes hydroxamiques et amidiques est aisée, ce qui présente un avantage industriel indéniable. On peut, en effet, fabriquer des polymères porteurs des deux sortes de groupes en question (1) et (2), avec bon rendement, par chauffage d'un polyacrylamide avec de l'hydroxylamine.

L'empêchement de la sédimentation des argiles dans une eau se fait le mieux lorsque, dans le polymère hydroxamique employé, 10 à 90% des fonctions actives sont des groupes hydroxamiques (1), le reste étant des groupes amide (2) ; les proportions préférées sont cependant de 30 à 60% de groupes hydroxamiques et 70 à 40% de groupes amide.

Bien que l'invention puisse être réalisée avec des polymères de différents degrés de polymérisation, notamment de 5 à 200, il est préférable d'employer des agents facilement solubles dans l'eau, ne communiquant à celle-ci qu'une faible viscosité, ce qui est obtenu avec des degrés de polymérisation de 10 à 100 et surtout de 12 à 70.

Quant la chaîne hydrocarbonée est du type simple, figurée dans les formules (1) et (2), les masses moléculaires (en poids) moyennes des polymères utilisables, correspondant aux degrés de polymérisation indiqués plus haut, se situent entre 500 et 25 000, de préférence entre 600 et 5 000 et le mieux de 1 000 à 2 000.

Dans les polymères décrits, 1 ou 2 atomes d'hydrogène, dans le groupe -NHOH, peuvent être substitués par des radicau alkyliques ou aryliques, notamment des alkyles en $C_1$ à $C_6$ par des phényles ou des alkylaryles. Ainsi, peut-on avoir, par exemple, des polymères du type

$$----(CH_2-\underset{\underset{R-N-OH}{|}}{\underset{C=O}{|}}{CH})_n----$$

où R peut être $-CH_3$, $-C_3H_7$, $-C_6H_{13}$, $-C_6H_5$, etc.

Etant donné ce que l'on sait déjà sur les effets des polymères hydroxamiques sur les boues, notamment les boues de forage (demande de brevet n° 62 16317), il est fort surprenant que ces polymères agissent dans le sens de l'empêchement de la sédimentation des argiles; on sait, en effet, que leur adjonction à une boue de forage se traduit par une baisse de la viscosité de la boue; or, une sédimentation est d'autant plus aisée que la viscosité du milieu dispersant est faible ; on aurait donc pu s'attendre à ce que la présence de polymères hydroxamiques, dans une eau de rivière plus ou moins argileuse, conduise - au contraire - à une sédimentation accentuée des argiles. C'est à l'inverse, un empêchement très marqué du dépôt que l'on constate lorsque des polymères hydroxamiques sont introduits dans l'eau. En effet dans ce cas, le facteur prépondérant est la non agglomération des particules, donc la diminution de leur vitesse de sédimentation en vertu de la loi de Stokes.

Les exemples qui suivent sont destinés à illustrer l'invention, non limitativement.

Pour ces exemples, on utilisait de l'eau distillée dans laquelle une quantité voulue d'argile était mise en suspension de la façon suivante. L'argile était ajoutée à 500 ml d'eau et dispersée à la turbine pendant 1 minute, ; la suspension obtenue était conservée dans un Erlenmeyer ; on l'homogénéisait avant de la laisser décanter pendant 1 heure. On soutirait alors, lentement, avec une canne de verre, le liquide surnageant, de manière à ne pas soulever l'argile déposée au fond.

Aux fins d'analyse, 500 ml de la suspension ainsi soutirés étaient placés dans un becher de 800 ml ; on lui

ajoutait l'adjuvant à étudier et l'on homogénéisait pendant quelques minutes. Le becher, recouvert d'une feuille de papier d'aluminium, était alors mis à l'étuve ventilée à 65°C pour 45 minutes. La suspension était ensuite versée dans une éprouvette de 500 ml et laissée décanter au repos pendant 24 heures ou 24h, 48h et 72h. Après le temps voulu, on en soutirait à la seringue 50 ml avec la pointe de celle-ci sur la graduation 200 ml de l'éprouvette. La quantité d'argile en suspension est alors déterminée en turbidimètre. Pour cela, on prépare un certain nombre de dilutions dont la turbidité est mesurée en unités Jackson au colorimètre HACH DR ; les unités Jackson sont converties en mg d'argile par litre. La concentration initiale en argile, dans la suspension, est déterminéé par extrait sec.

Dans les exemples utilisant les polymères hydroxamiques, suivant l'invention, ces derniers dérivent du polyacrylamide et contiennent encore un certain pourcent de groupes amide.

Les tableaux des résultats indiquent, en abréviations:

M la masse moléculaire du polymère employé;

Taux hx % le taux % de remplacement des groupes amide du polymère de départ par les groupes hydroxamiques;

APH mg/l teneur en le polymère ajouté à l'eau argileuse;

$A_0$ concentration en argile en mg/l dans la suspension au temps 0;

$A_{24}$,$A_{48}$ ou $A_{72}$ concentration en argile en mg/l dans la suspension après le temps indiqué (24 h, 48 h ou 72 h);

$$\frac{A_{24}}{A_0} \%$$

degré d'inhibition de la sédimentation, c'est-à-dire le % de l'argile initiale restant après le temps de l'essai.

**Exemples 1 à 16**

Dans cette série d'essais, on a opéré pendant 24 h de décantation avec des masses molairesdifférentes du polymère obtenu à partir du polyacrylamide ; on a également fait varier les taux hx de remplacement des groupes amidiques par des groupes hydroxamiques ; en outre, différentes concentrations en polymère de l'eau traitée ont été expérimentées dans les exemples 2 à 12.

Les exemples 13 à 16 donnent les résultats obtenus avec un adjuvant connu, de la technique antérieure, le méthylène bisnaphtalène sulfonate de Na, appliqué à la même eau argileuse qui servait dans les exemples 8 à 12.

Les résultats sont réunis au tableau 1. Il s'ensuit qu'un degré d'inhibition beaucoup plus élevé peut être obtenu par l'application de l'invention par rapport à l'art connu: en effet, d'après l'exemple 5, il est possible d'arriver à maintenir en suspension environ 60% de l'argile initiale, en ne dissolvant qu' 1 mg d'un polymère hydroxamique par litre d'eau, alors gue le maximum d'effet inhibiteur de sédimentation avec le méthylène bisnaphtalène sulfonate de Na n'atteint même pas 20% pour 80 mg d'adjuvant par litre d'eau (voir exemple 16).

D'autres renseignements intéressants peuvent être tirés du tableau I qui se trouve à la page suivante.

**TABLEAU I**

| N° | M | Taux hx % | APH mg/l | AO | $A_{24}$ | $\frac{A_{24}}{A_o}$ % |
|---|---|---|---|---|---|---|
| 1 | — | — | 0 | 420 | 50 | 11,9 |
| 2 | 40 000 | 27 | 1 | " | 52 | 12,3 |
| 3 | 24 400 | 32 | 1 | " | 65 | 15,5 |
| 4 | 7 500 | 34 | " | " | 175 | 41,6 |
| 5 | 1 500 | 31 | " | " | 250 | 59,5 |
| 6 | 7 500 | 6 | " | " | 80 | 19,0 |
| 7 | 1 500 | " | " | " | 125 | 29,7 |
| 8 | — | — | 0 | 270 | 0 | 0 |
| 9 | 1 500 | 55 | 1 | " | 75 | 47 |
| 10 | " | " | 2 | " | 94 | 55 |
| 11 | " | " | 10 | " | 66 | 31,4 |
| 12 | " | " | 20 | " | 25 | 9,2 |
| | Méthylène bis-naphtalène sulfonate de sodium mg/l | | | | | |
| 13 | | | 10 | " | 21 | 7,8 |
| 14 | " | " | 20 | " | 29 | 10,8 |
| 15 | " | " | 40 | " | 36 | 13,3 |
| 16 | " | " | 80 | " | 52 | 19,2 |

On voit, en effet que, pour un taux hydroxamique hx % sensiblement égal, le degré d'inhibition est d'autant meilleur que la masse moléculaire M du polmère employé est faible ; les exemples 2 à 5 montrent que ce résultat passe de 12,3 à 59,5 % lorsque M varie de 40 000 à 1 500. D' autres essais, non indiqués dans le tableau, conduisent à une inhibition de 60,5% lorsque M égale 800 avec hx=32%. Pour une même eau argileuse, la comparaison de l'exemple 4 avec 6 indique l'importance du hx : on constate en effet gu'en passant de hx % = 6 à hx = 34, $(A_{24}/A_o)$% varie de 19 à 41,6.

Une particularité importante de l'invention est illustrée par les exemples 9 à 12 qui montrent qu'il n'y a non seulement aucun intérêt à trop augmenter la concentration en adjuvant dans l'eau argileuse, mais que cette concentration doit être faible et comprise entre certaines limites pour procurer un maximum d'effet.

Ainsi est-il établi que les concentrations en adjuvant, suivant l'invention, doivent être comprises entre 0,5 et 10 mg/l et, de préférence, entre 1 et 5 mg/l, ou entre 0,1 et $5x10^{-6}$ macromoles/l.

**Exemples 17 à 20**

Des essais similaires aux précédents sont effectués avec une eau tenant en suspension 1 540 mg/l d'argile $(A_o)$. Le polymère hydroxamique, obtenu à partir du polyacrylamide, présente une masse moléculaire M=5 100;

il est utilisé à la concentration de 1 mg/l, soit $2x10^{-7}$ macromoles par litre. Les décantations et analyses sont effectuées après 24 h, 48 et 72 h, ce qui conduit respectivement aux concentrations $A_{24}$, $A_{48}$, $A_{72}$ du tableau II qui suit.

**TABLEAU II**

| M=5 100 | $A_o$ = 1 540 mg/l | | Concen.APH = 1 mg/l | |
|---|---|---|---|---|
| N° | 17 | 18 | 19 | 20 |
| | Témoin APH 0 mg/l | | | |
| Taux hx % | — | 7 | 20 | 33 |
| $A_{24}$ mg/l | 130 | 160 | 460 | 740 |
| $A_{24}/A_o$ % | 8,4 % | 10,4 % | 29,8 % | 48 % |
| $A_{48}$ mg/l | 50 | 85 | 250 | 370 |
| $A_{48}/A_o$ % | 3,2 % | 5,5 % | 16,2 % | 24 % |
| $A_{72}$ mg/l | 40 | 50 | 170 | 270 |
| $A_{72}/A_o$ % | 2,6 % | 3,2 % | 11 % | 17,5 % |

L'exemple 17 correspond à l'essai sans aucun adjuvant: il conduit à des % d'argile restante très faibles. L'amélioration n'est pas très forte dans l'exemple 18, parce que le taux hydroxamique hx est faible, 7%. Par contre, les résultats sont déjà intéressants dans l'exemple 19 où hx = 20% : là, le degré d'inhibition de la sédimentation est voisin de 30% après 24 h, et il reste encore à 11% après 72 h.

L'exemple 20 confirme les résultats du tableau précédent, en ce que hx supérieur à 30 conduit à d'excellents résultats : on a, en effet, encore 48% de l'argile initiale dans l'eau, après 24 h, et 17,5% après 72 h, c'est-à-dire plus qu'il n'en reste après 24 h avec 40 mg/l de méthylène bis-naphthalène sulfonate de sodium.

**Revendications**

1. Procédé pour l'empêchement de la sédimentation d' argiles dans l'eau, par l'adjonction d'un polymère porteur de groupes hydroxamiques ou thiohydroxamiques, ou de tels groupes substitués, attachés à une chaîne hydrocarbonée, linéaire, caractérisé en ce que seulement 0,5 à 10 mg de ce polymère sont dissous dans l'eau à traiter, et le polymère a une masse moléculaire de 800 à 5100.

2. Procédé suivant la revendication 1, dans lequel la dite chaîne hydrocarbonée est polyoléfinique, en particulier polyvinylique, polyacrylique ou polybuténylique.

3. Procédé suivant la revendication 1 ou 2, caractérisé en ce que le polymère, porteur de groupes hydroxamiques, comporte des motifs de copolymères, en particulier acides, esters ou sels acryliques, maléiques, vinyliques, vinyl pyrrolidone, butadiène, styrène ou acrylonitrile.

4. Procédé suivant la revendication 1, 2 ou 3, dans lequel le polymère porte, à côté des groupes hydroxamiques, des groupes amide, ce polymère dérivant d'un polyacrylamide, caractérisé en ce que 30 à 60% de groupes amide sont remplacés par des groupes hydroxamiques.

5. Procédé suivant une des revendications 1 à 4, caractérisé en ce gu' un ou les deux atomes d'oxygène de la fonction hydroxamique

$$-\overset{\overset{O}{\|}}{C}-NHOH$$

sont remplacés par des atomes de soufre.

6. Procédé suivant une des revendications précédentes, caractérisé en ce que la masse moléculaire du polymère est de 800 à 2000.

7. Procédé suivant une des revendications précédentes, caractérisé en ce que la concentration en le polymère à groupes hydroxamiques, dans l'eau à traiter, est de 0,1 x $10^{-6}$ à 5 x $10^{-6}$ macromole/l.

8. Procédé suivant une des revendications précédentes, dans lequel 1 ou 2 atomes d'hydrogène de la fonction NHOH hydroxamique sont remplacés par des radicaux, en particulier en $C_1$ à $C_6$ ou/et des phényles, ou/et des alkylaryles.

9. Procédé suivant une des revendications précédentes, caractérisé en ce que la concentration en le polymère hydroxamique, dans l'eau à traiter, est de préférence de 1 à 5mg/l.

10. Application du procédé suivant une des revendications 1 à 8 à des eaux renfermant environ 150 à 1540 mg d'argile par litre.

**Claims**

1. Process for inhibiting the deposition of clays in water by the addition of a polymer carrying hydroxamic or thiohydroxamic groups or such groups substituted, attached to a linear hydrocarbon chain, characterised in that only 0.5 to 10 mg of the polymer is dissolved in the water to be treated and that the polymer has a molecular weight of 800 to 5100.

2. Process according to claim 1, in which the hydrocarbon chain is polyolefinic, in particular polyvinylic, polyacrylic or polybutenylic.

3. Process according to claim 1 or 2, characterised in that the polymer, carrying hydroxamic groups, comprises copolymer units, in particular acrylic, maleic, vinylic acids, esters or salts, vinylpyrrolidone, butadiene, styrene or acrylonitrile.

4. Process according to claim 1, 2 or 3, in which the polymer carries amide groups alongside the hydroxamic groups, the polymer being derived from a polyacrylamide, characterised in that 30 to 60% of the amide groups are replaced by hydroxamic groups.

5. Process according to any of claims 1 to 4, characterised in that one or the two oxygen atoms of the hydroxamic function

$$-\overset{\overset{\displaystyle O}{\|}}{C}-NHOH$$

are replaced by sulphur atoms.

6. Process according to any of the preceding claims, characterised in that the molecular weight of the polymer is from 800 to 2000.

7. Process according to any of the preceding claims, characterised in that the concentration of the polymer having hydroxamic groups in the water to be treated is from $0.1 \times 10^{-6}$ to $5 \times 10^{-6}$ macromole/1.

8. Process according to any of the preceding claims, in which 1 or 2 hydrogen atoms of the hydroxamic NHOH function are replaced by radicals, in particular $C_1C_6$ and/or phenyls and/or alkylaryls.

9. Process according to any of the preceding claims, characterized in that the concentration of hydroxamic polymer in the water to be treated is preferably from 1 to 5 mg/l.

10. Use of the process according to any of claims 1 to 8 with waters containing about 150 to 1540 mg of clay per litre.

**Patentansprüche**

1. Verfahren zur Verhinderung der Sedimentation von Tonerden in Wasser, durch Zusatz eines Polymeren, das Hydroxamsäuregruppen oder Thiohydroxamsäuregruppen oder derartige substituierte Gruppen trägt, die an eine lineare Kohlenwasserstoffkette gebunden sind, dadurch gekennzeichnet, daß nur 0,5 bis 10 mg dieses Polymeren in dem zu behandelnden Wasser gelöst werden und das Polymere ein Molekulargewicht von 800 bis 5100 hat.

2. Verfahren nach Anspruch 1, bei dem die Kohlenwasserstoffkette polyolefinisch, insbesondere polyvinylisch, polyacrylisch oder polybutenylisch ist.

3. Verfahren nach Anspruch 1 oder 2, dadurch gekennzeichnet, daß das Polymere, das Hydroxamsäuregruppen trägt, Copolymergruppen, insbesondere Acrylsäuren, Maleinsäuren, deren Ester oder Salze, vinylischer Natur, von Vinylpyrrolidon, Butadien, Styrol oder Acrylnitril, enthält.

4. Verfahren nach Anspruch 1, 2 oder 3, worin das Polymere neben den Hydroxamsäuregruppen Amidgruppen enthält, wobei sich das Polymere von einem Polyacrylamid ableitet, dadurch gekennzeichnet, daß 30 bis 60% der Amidgruppen durch Hydroxamsäuregruppen ersetzt sind.

5. Verfahren nach einem der Ansprüche 1 bis 4, dadurch gekennzeichnet, daß eines oder zwei der Sauerstoffatome der Hydroxamsäuregruppe

$$-\overset{\overset{\displaystyle O}{\|}}{C}-NHOH$$

durch Schwefelatome ersetzt sind.

6. Verfahren nach einem der vorhergehenden Ansprüche, dadurch gekennzeichnet, daß das Molekulargewicht des Polymeren 800 bis 2000 beträgt.

7. Verfahren nach einem der vorhergehenden Ansprüche, dadurch gekennzeichnet, daß die Konzentration des Polymeren mit Hydroxamsäuregruppen in dem zu behandelnden Wasser $0,1 \times 10^{-6}$ bis $5 \times 10^{-6}$ Makromol/l beträgt.

8. Verfahren nach einem der vorhergehenden Ansprüche, worin 1 oder 2 Wasserstoffatome der Hydroxamsäurefunktion NHOH durch Reste, insbesondere mit $C_1$ bis $C_8$ und/oder Phenyleund/oder Alkylaryl, ersetzt sind.

9. Verfahren nach einem der vorhergehenden Ansprüche, dadurch gekennzeichnet, daß die Konzentration des Hydroxamsäurepolymeren in dem zu behandelnden Wasser vorzugsweise 1 bis 5 ml/l beträgt.

10. Verwendung des Verfahren nach einem der Ansprüche 1 bis 8 für Wasser, das etwa 150 bis 1540 mg Tonerde pro Liter enthält.